# EUROPÄISCHE PATENTSCHRIFT

(11) **EP 2 221 510 B1**
(45) Veröffentlichungstag und Bekanntmachung des Hinweises auf die Patenterteilung: **20.04.2016**
(21) Anmeldenummer: 09014866.9
(22) Anmeldetag: 01.12.2009
(51) Int. Cl.: F16H 57/04, F16C 33/10, F16H 57/08

(54) **Planetenrad mit einem eine axiale Nut aufweisenden Lagerbolzen**
Planet wheel with a bolt comprising an axial nut
Satellite doté d'un boulon d'appui comportant un écrou axial

(30) Priorität: 23.02.2009 DE 102009010001
(43) Veröffentlichungstag der Anmeldung: 25.08.2010
(73) Patentinhaber: IMS Gear GmbH, 78166 Donaueschingen (DE)
(72) Erfinder: Hagedorn, Heinz Gert, 78628 Rottweil (DE); Poyraz, Erkan, 78166 Donaueschingen (DE); Riester, Thomas, 78052 Villingen-Schwenningen (DE)
(74) Vertreter: Westphal, Mussgnug & Partner Patentanwälte mbB

(56) Entgegenhaltungen:
- DE-A1- 2 234 488
- DE-A1- 2 702 321
- DE-A1-102006 023 380
- DE-A1-102006 023 390
- JP-A- 62 007 972

## Beschreibung

Die Erfindung betrifft ein Umlauf-Zahnradgetriebe mit mindestens zwei miteinander kämmenden Zahnrädern gemäß Oberbegriff des Patentanspruchs 1.

Ein solches Zahnradgetriebe ist z. B. aus DE 27 02 321 A1 bekannt. Ein ähnliches Getriebe wird auch in der DE 22 34 488 A1 beschrieben.

Umlauf-Zahnradgetriebe sind zum Beispiel Planentengetriebe. Die umlaufenden Räder, die Planentenräder, sind mittels Gleitlager auf Bolzen gelagert. Beim Betrieb eines fettgeschmierten Planetengetriebes besteht aufgrund von Mangelschmierung die Gefahr eines erhöhten Verschleißes der Bolzen mit einer negativen Folge hinsichtlich der Lebensdauer des Zahnradgetriebes.

Aus der DE 10 2006 023 390 A1 ist ein Planetenrad bekannt, bei dem der Bolzen ein Hartmetallbolzen ist. Die hohe Härte eines solchen Hartmetallbolzens in Verbindung mit dessen hohen Zähigkeit ermöglicht einen verschleißbeständigeren Betrieb des einzelnen Gleitlagers.

Ferner ist aus der DE 10 2006 023 380 A1 ein Umlauf-Zahnradgetriebe mit Planetenrädern bekannt, die mittels einer Gleitfuge jeweils auf einem Bolzen gelagert sind. Zur Verbindung dieser Gleitfuge mit den Eingriffsräumen der Verzahnung der Planentenräder mit einem Hohlrad sind die Planetenräder mit einer radialer Durchgangsbohrung derart versehen, dass ein Schmiermittel beim aufeinander Abwälzen der Zahnräder über diese Durchgangsbohrung in die Gleitfuge gefördert wird und dadurch der Verschleiß der Gleitlagerung vermindert und infolgedessen die Lebensdauer des Zahnradgetriebes erhöht wird.

Die Aufgabe der Erfindung ist es, ein Umlauf-Zahnradgetriebe mit mindestens zwei miteinander kämmenden Zahnrädern bereitzustellen, dessen Lebensdauer weiter erhöht wird.

Diese Aufgabe wird gelöst durch ein Umlauf-Zahnradgetriebe mit den Merkmalen des Patentanspruchs 1.

Ein solches Umlauf-Zahnradgetriebe mit mindestens zwei miteinander unter Ausbildung eines Eingriffsraums kämmenden Zahnrädern, von denen eines ein mittels einer Lagerung auf einem Bolzen drehbar gelagertes umlaufendes Zahnrad ist und eine Mantelfläche des Bolzens eine Lagerfläche bildet, weist erfindungsgemäß wenigstens eine auf der Mantelfläche des Bolzens angeordnete axiale Längsnut auf.

Das Zahnradgetriebe weist erfindungsgemäß wenigstens ein bolzengelagertes umlaufendes Zahnrad auf mit mindestens einer radialen, in dessen Zahngrund angeordneten Bohrung, die den Eingriffsraum der miteinander kämmenden Zahnräder mit der Lagerung des umlaufenden Zahnrades verbindet, wodurch eine weitere Steigerung der Lebensdauer des erfindungsgemäßen Umlauf-Zahnradgetriebes erzielt wird. Hierbei wird während des Getriebelaufs das Schmierfett im Verzahnungseingriff der Zahnräder durch diese radiale Bohrung in den Planetenrädern in Richtung des Bolzens gepresst und kann sich dort in einer radial nach außen weisenden Längsnut des Bolzens ansammeln, wodurch nachhaltig eine Mangelschmierung verhindert wird. Die Lebensdauer eines derartig ausgebildeten Umlauf-Zahnradgetriebes lässt sich damit nochmals um den Faktor 2 bis 3 steigern. Diese erfindungsgemäße axiale Längsnut dient als Fettreservoir für Schmierfett, welches bei der Montage des Umlauf-Zahnradgetriebes in diese Längsnuten eingefüllt wird. Bei Betrieb des Umlauf-Zahnradgetriebes wird das Schmierfett aus dieser Längsnut in die Gleitfuge zwischen der Mantelfläche des Bolzens und der Innenfläche gefördert und dort durch die Drehung des Planetenrades gleichmäßig verteilt und vermindert dadurch die Gefahr einer Mangelschmierung, wodurch die Lebendauer des Umlauf-Zahnradgetriebes um den Faktor 2 bis 3 gesteigert wird.

Vorzugsweise ist bei einer Weiterbildung der Erfindung die axiale Längsnut mit einem kreisabschnittsförmigen Querschnitt, insbesondere einem halbkreisförmigen Querschnitt ausgebildet. Es ist jedoch auch möglich, dass der Querschnitt konkav, konvex oder V-förmig bzw. U-förmig ausgebildet ist. Solche Längsnuten lassen sich einfach und damit kostengünstig herstellen ohne die Gesamtkosten des erfindungsgemäßen Umlauf-Zahnradgetriebes wesentlich zu erhöhen.

In einer Weiterbildung der Erfindung sind zwei axiale Längsnuten diametral gegenüberliegend auf der Mantelfläche des Bolzens angeordnet. Damit es möglich den durch eine solche Längsnut hinsichtlich der Lebensdauer erzielten Effekt zu verstärken. Vorzugsweise sind die Längsnuten in einem Bereich des Bolzens angeordnet, der das Planetenrad aufnimmt.

Gemäß einer anderen Weiterbildung der Erfindung ist bzw. sind der bzw. die Bolzen in einem Planetenträger angeordnet. Idealerweise sind dann der bzw. die Bolzen derart in dem Planetenträger angeordnet, dass die axiale Längsnut bzw. die axiale Längsnuten des Bolzens bzw. der Bolzen hinsichtlich des Planetenträgers radial fluchtend verläuft bzw. verlaufen. Somit verlaufen die Längsnuten um 90° versetzt zur Drehmomentübertragung in Umfangsrichtung, wodurch weder das Umkehrspiel noch der in Umfangsrichtung tragende Querschnitt des Bolzens in negativer Weise beeinflusst wird.

Vorzugsweise weist eine solche radiale Bohrung in dem umlaufenden Zahnrad einen Durchmesser auf, der kleiner ist als der Abstand der fußpunktseitigen Endpunkte der Wälzfugen zweier sich gegenüberliegenden Zahnflanken des umlaufenden Zahnrades.

Gemäß einer anderen Weiterbildung der Erfindung kann diese radiale Bohrung auch einen Durchmesser aufweisen, der größer ist als der Modul der Verzahnung des umlaufenden Zahnrades.

Schließlich kämmt gemäß einer Weiterbildung der Erfindung das umlaufende Zahnrad mit einem Hohlrad bzw. einem Sonnenrad.

Die Erfindung wird nachfolgend anhand von Ausführungsbeispielen unter Bezugnahme auf die beigefügten Figuren ausführlich beschrieben. Es zeigen:
- Figur 1: eine Querschnittsdarstellung eines Planetenträgers eines Umlauf-Zahnradgetriebes mit einer Ausführungsform des erfindungsgemäßen Bolzens gemäß Schnitt I-I nach Figur 2,
- Figur 2: eine Draufsicht auf einen Planetenträger eines Umlauf-Zahnradgetriebes mit einem Ausführungsbeispiel eines erfindungsgemäßen Bolzens,
- Figur 3: eine Darstellung in Seitensicht des in den Planetenträger gemäß den Figuren 1 und 2 eingebauten Bolzens,
- Figur 4: eine Stirnansicht des in Figur 3 dargestellten Bolzens,
- Figur 5: eine Darstellung in Teilperspektive eines Umlauf-Zahnradgetriebes mit einem in den Figuren 1 bis 3 dargestellten Bolzen, und
- Figur 6: eine Querschnittsdarstellung in radialer Richtung des Planetenrades nach Figur 5.

Ein Planetengetriebe ist eine spezielle Bauform eines Umlauf-Zahnradgetriebes und verfügt drei oder mehr koaxial angeordnete Wellen. Die grundlegende Bauart besteht aus einem Zahnradsatz, der von innen nach außen aus einem Sonnenrad, den von einem Planetenträger (auch "Steg" genannt) getragenen Planetenrädern und einem Hohlrad mit Innenverzahnung besteht.

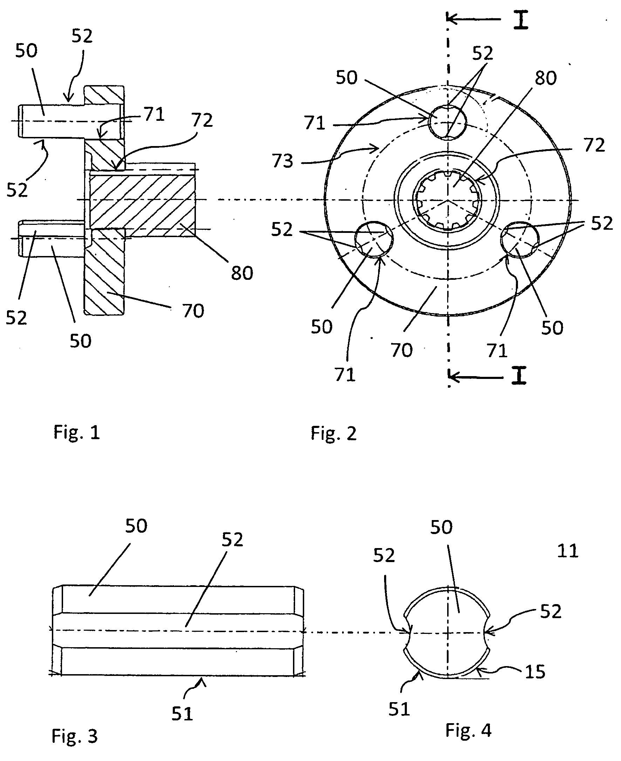

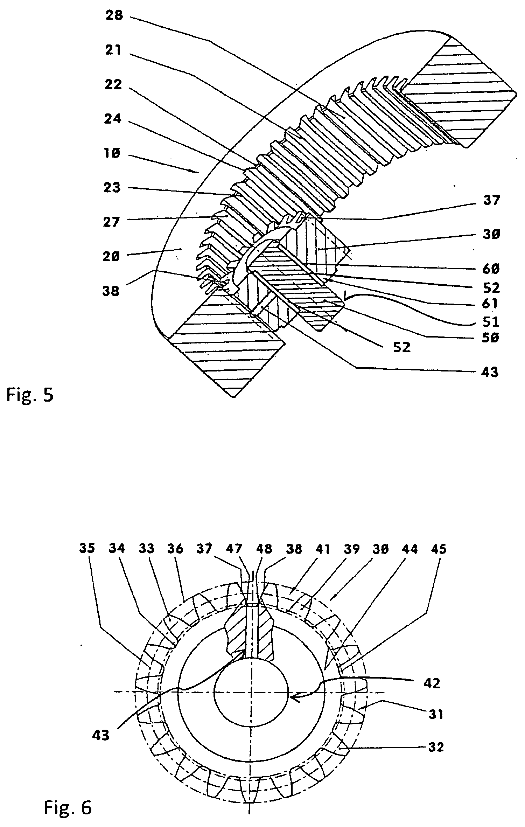

Die Figuren 1 und 2 zeigen einen solchen Planetenträger 70 eines in Figur 5 in einer Teilperspektive dargestellten Planetenrades 30, das in Eingriff mit einem Hohlrad 20 steht und damit Teil eines als Planetengetriebe ausgeführten Umlauf-Zahnradgetriebes 10 sind.

Dieser Planetenträger 70 gemäß den Figuren 1 und 2 ist in seiner Grundform scheibenförmig mit einer zentralen Bohrung 72 ausgebildet, um über diese zentrale Bohrung 72 den Planetenträger 70 mit einem Ritzel 80 zu verbinden, um je nach Anwendung beispielsweise den Planetenträger 70 als Abtrieb zu verwenden. Auch ist es möglich den Planetenträger 70 fest mit dem Gehäuse des Umlauf-Zahnradgetriebes 10 zu verbinden, um das Getriebe als Standgetriebe zu verwenden.

Um die zentrale Bohrung 72 des Planetenträgers 70 sind um jeweils 120° versetzt zueinander drei Bohrungen 71 in dessen scheibenförmigen Teil zur Aufnahme von Bolzen 50 vorgesehen, die als Lagerbolzen für drei Planetenräder 30, von denen lediglich in Figur 5 ein Planetenrad 30 dargestellt ist, dienen.

Einen solchen als Lagerbolzen für Planetenräder dienender Bolzen 50 mit auf dessen Mantelfläche 51 angeordneten zwei axialen Längsnuten 52 zeigen die Figuren 3 und 4 in einer Seiten- und Stirnansicht, wobei diese Längsnuten 52 über die gesamte Länge des Bolzens 50 verlaufen.

Auch in den Figuren 1 und 2 sind deutlich die auf einer Mantelfläche 51 eines jeden in dem Planetenträger 70 eingebauten Bolzens 50 angeordneten axialen Längsnuten 52 zu erkennen, wobei jeder Bolzen 50 zwei solcher Längsnuten 52 aufweist. Gemäß den Figuren 2 und 4 sind die beiden Längsnuten 52 eines Bolzens 50 diametral gegenüberliegend auf dessen Mantelfläche 51 ausgebildet und weisen eine kreisabschnittsförmigen Querschnitt auf. Die Bolzen 50 können auch derart ausgeführt sein, dass die Längsnuten 52 nicht wie in Figur 3 dargestellt, über deren gesamte Länge verlaufen, sondern lediglich im Bereich der Planetenradaufnahme, also nicht in demjenigen Bereich des Bolzens 50, der in dem Planetenträger 70 fest arretiert ist, wie dies in Figur 1 dargestellt ist.

Gemäß Figur 2 sind diese Bolzen 50 derart in dem Planetenträger 70 befestigt, dass die beiden Längsnuten 52 jedes Bolzens 50 hinsichtlich des Planetenträgers 70 radial fluchten.

Diese Längsnuten 52 dienen als Fettreservoir für Schmierfett, welches bei der Montage des Umlauf-Zahnradgetriebes 10 mit Schmierfett befüllt wird. Da sich im Betrieb des Umlauf-Zahnradgetriebes 10 das auf dem Bolzen 50 gelagerte Planentenrad 30 dreht, wird das Schmierfett zur Verhinderung einer Mangelschmierung aus diesem Fettreservoir in das Lager des Planetenrades 30 gefördert, wie dies anhand der Figur 5 erläutert wird.

Die Figur 5 zeigt ein Umlauf-Zahnradgetriebe 10 mit einem Hohlrad 20 und ein mit diesem Hohlrad 20 kämmendes Planetenrad 30, jedoch weder den zugehörigen Planetenträger 70 gemäß den Figuren 1 und 2, der drei Planetenräder 30 dieses Umlauf-Zahnradgetriebes 10 führt, noch ein zughöriges Sonnenrad. Dieses Umlauf-Zahnradgetriebe 10 stellt damit ein dreiwelliges, einstegiges Planeten-Getriebe dar. Ein solches Planeten-Getriebe kann auch mehrstegig ausgeführt sein, beispielsweise als Kombination mit mehreren Planetensätzen.

Das Hohlrad 20, die Planetenräder 30 (von denen nur eines dargestellt ist) und das Sonnenrad (nicht dargestellt) sind koaxial zueinander angeordnet, wobei die Planetenräder 30 um jeweils 120° zueinander auf einem gemeinsamen Teilkreis 73 eines Planetenträgers 70 gemäß den Figuren 1 und 2 angeordnet sind. Jedes dieser Planetenräder 30 ist drehbar auf einem Bolzen 50 gelagert, wobei alle drei Bolzen 50 entsprechend der Figur 1 oder Figur 3 ausgebildet und fest in dem Planetenträger 70 nach den Figuren 1 und 2 arretiert sind. Somit weist der in Figur 5 dargestellte Bolzen 50 ebenfalls zwei axiale Längsnuten 52 auf, die diametral gegenüberliegend auf dessen Mantelfläche 51 angeordnet sind und entweder über dessen gesamte Länge verlaufen, oder - wie in Figur 5 dargestellt - lediglich im Bereich der Planetenradaufnahme ausgebildet sind. Die Funktion dieser Längsnuten 52 als Fettreservoir zur Verringerung einer Minderschmierung wurde bereits weiter oben erläutert.

Das Hohlrad 20, die Planetenräder 30 und das nicht dargestellte Sonnenrad haben in diesem Umlauf-Zahnradgetriebe 10 eine Evolventenverzahnung mit einem Modul von bspw. 0,8 mm. Das innenverzahnte Hohlrad 20 hat bspw. 48 Zähne 22, das einzelne gradverzahnte Planetenrad 30 hat 19 Zähne 32, wobei das Hohlrad 20 bspw. um 50% breiter ist als das Planetenrad 30.

Das Planetenrad 30 ist im Detail in Figur 6 dargestellt, dessen Länge bspw. 8,7 mm beträgt. Der Durchmesser des Kopfkreises 36 ist 15,9 mm mit einer Toleranz von +0,1 mm.

Die Verzahnungslänge ist hier einen Millimeter kürzer als die Länge des Planetenrades 30, dessen Verzahnung 31 ballig ausgeführt ist, um einen Kantenlauf des Planetenrades 30 im Hohlrad 20 zu verhindern. Aus den Verzahnungsdaten des Ausführungsbeispiels ergibt sich ein Teilkreisdurchmesser der Verzahnung 31 von 14,4 mm. Der Eingriffswinkel der Verzahnung 31 beträgt z. Bsp. 20°. Die Kopfhöhe des einzelnen Zahns 32, also der Abstand des Zahnkopfes 38 zum Teilkreis 35, entspricht dem Modul des Planetenrades 30. Die Höhe des Zahnfußes 39, also der Abstand des Zahngrundes 34 zum Teilkreis 35, ist um das Kopfspiel höher als der Modul. Das Kopfspiel beträgt bspw. ein Viertel des Moduls.

Zur Aufnahme des Bolzens 50 hat das Planetenrad 30 eine in seiner Längsrichtung orientierte zylindrische Durchgangsbohrung 42 mit bspw. einem Durchmesser von 5,03 mm und einer Toleranz von +0,02 mm.

Das in Figuren 5 und 6 dargestellte Planetenrad 30 hat außerdem eine radial orientierte zylindrische Bohrung 43, die den Zahngrund 34 mit der Durchgangsbohrung 42 verbindet und einen Durchmesser von etwa 1 mm aufweist. Der Durchmesser der Bohrung 43 ist damit größer als der Modul der Verzahnung 31. Statt einer einzigen Bohrung 43 kann das Planetenrad 30 mehrere solcher Bohrungen 43 aufweisen, die versetzt zueinander im gleichen Zahngrund 34 oder in unterschiedlichen Zahngründen 34 angeordnet sein können. Statt zylindrischen Bohrungen 43 können auch kegelförmige Bohrungen verwendet werden, die sich dann vom Zahngrund 34 zur Durchgangsbohrung 42 verjüngen.

Die Durchgangsbohrung 42 kann auch mit einer Längs- oder einer Spiralnut versehen werden, die den Auslauf der radialen Bohrung 42 durchdringt.

Das Planetenrad 30 ist aus einem Einsatzstahl, z. B. 16MnCr5 hergestellt und wird nach Fertigstellung einsatzgehärtet. Der Bolzen 50 hat zumindest im Bereich der Planetenradaufnahme einen zylindrischen Querschnitt von bspw. 5 mm und besteht z. B. aus einem pulvermetallurgisch hergestellten Werkstoff, insbesondere aus Stahl. In dem Bereich der Planetenradaufnahme weist der Bolzen 50 nach Figur 5 die bereits oben beschriebenen axialen Längsnuten 52 auf, während in demjenigen Bereich des Bolzens 50, der von dem Planetenträger 70 aufgenommen wird, diese Längsnuten 52 nach Figur 1 nicht fortgeführt sind.

Vor der Montage des Planetenrades 30 auf den Bolzen 50 werden dessen Längsnuten 52 mit Schmierfett aufgefüllt und erst anschließend das Planetenrad 30 auf den Bolzen 50 geschoben und gegen axiales Verschieben gesichert. Der Bolzen 50 und die Durchgangsbohrung 42 des Planetenrades 30 haben eine Spielpassung. Nach der gesamten Montage des Umlauf-Zahnradgetriebes werden die Verzahnungen 21 und 31 des Hohlrades 20 und des Planetenrades 30 mit einem Fett geschmiert. Ist das Planetengetriebe 10 in einem Gehäuse angeordnet, kann das Getriebe auch mit einem Öl geschmiert werden.

Im Betrieb des Planetengetriebes 10 wälzt bspw. das Planetenrad 30 im Hohlrad 20 ab. Hierbei berührt eine Zahnflanke 37 des Planetenrades 30 eine entgegengesetzt gerichtete Zahnflanke 27 des Hohlrades 20 - bei einem vereinfacht in einer Ebene dargestellten Räderpaar - in einem Punkt der Eingriffslinie. Dieser Punkt, der Wälzpunkt, liegt beim abwälzenden Planetenrad 30 nahe des Zahnfußes 39 und beim stehenden Hohlrad 20 nahe des Zahnkopfes 23. Beim Weiterdrehen des Planetenrades 30 wandert der momentane Wälzpunkt der beiden Zahnflanken 37 und 27 entlang der Wälzfuge beim abwälzenden Planetenrad 30 in Richtung des Zahnfußes 39 und beim stehenden Hohlrad 20 in Richtung des Zahnkopfes 23. Die Länge der Wälzfuge wird hier durch den Schnittpunkt der Teilkreise der beiden Verzahnungen 21 und 31 geteilt. Sobald der Zahnkopf 33 des abwälzenden Planetenrades 30 die Zahnflanke 27 des stehenden Hohlrades 20 verlässt, kommt die Gegenflanke 38 des Zahns 32 des abwälzenden Planetenrades 30 mit der Gegenflanke 28 des nächsten Zahnes 22 des stehenden Hohlrades 20 in Eingriff. Hierbei erfolgt keine Berührung des Zahnkopfs 33 mit dem Zahngrund 24 des Hohlrades 20. Der neue Wälzpunkt liegt am Kopfkreis 36 des abwälzenden Planetenrades 30 und nahe dem Fußkreis des stehenden Hohlrades 20. Beim Weiterdrehen des abwälzenden Planetenrades 30 wandert der momentane Wälzpunkt entlang der neuen Wälzfuge in Richtung des Fußkreises 44 des Planetenrades 30 und in Richtung des Zahnkopfes 23 stehenden Hohlrades 20.

Beim Abwälzen des Planetenrades 30 und des Hohlrades 20 dreht sich das Planetenrad 30 auf dem Bozen 50, wobei nach Figur 5 das Planetenrad 30 und der Bolzen 50 ein Radialgleitlager 60 mit einer Gleitfuge 61 bilden.

Der vom Zahngrund 34 des Planetenrades 30 und dem Zahnkopf 23 des Hohlrades 20 eingeschlossene Raum sowie die jeweilige Wälzfuge werden als Eingriffsraum bezeichnet. Beim Abwälzen der Zahnräder 20 und 30 wird das Schmiermittel im Eingriffsraum verteilt. Sobald die Zahnlücke 41 des Planetenrades 30 über einem Zahn 22 des Hohlrades 20 abwälzt, wird Schmierfett in die radiale Bohrung 43 gepresst und das bereits in der Bohrung 43 befindliche Schmierfett in Richtung der Durchgangsbohrung 42 des Planetenrades 30 bzw. des Bolzens 50 gefördert, wodurch sich das Schmierfett in den axialen Längsnuten 52 des Bolzens 50 ansammeln und von dort auch in die Gleitfuge 61 eindringen und sich dort aufgrund der Drehungen des Planetenrades 30 auf dem Bolzen 50 gleichmäßig verteilen kann. Durch die damit erzielte kontinuierliche Schmierung wird ein Verschleiß im Bereich der Gleitfuge 61 verhindert, wodurch die Lebensdauer des Planetengetriebes 10 erheblich erhöht wird. Ferner wird dadurch, dass die Drehmomentübertragung beim Planetengetriebe in Umfangsrichtung erfolgt, jedoch die Längsnuten 52 um 90° versetzt radial nach außen zeigen, weder das Umkehrspiel noch der in Umfangsrichtung tragende Querschnitt des Bolzens 50 nachteilig beeinflusst.

Aufgrund des großen Durchmessers der Bohrung 43 des Planetenrads 30 wird bei dem hier beschriebenen Planetengetriebe 10 ständig genügend Schmiermittel in die durch die Längsnuten 52 gebildeten Schmierfettreservoire nachgeliefert, so dass an der Gleitfuge 61 immer genügend Schmiermittel zur Verfügung steht. Beispielsweise kann diese Bohrung 43 auch kegelförmig ausgebildet sein.

Der maximale Durchmesser der Bohrung 43 wird begrenzt durch den Abstand der fußpunktseitigen Endpunkte 47 und 48 der Wälzfugen zweier sich gegenüberliegenden Zahnflanken 37 und 38 des Planetenrads 30. Der Abstand dieser Endpunkte 47 und 48 ist gleich dem Abstand der Schnittpunkte des Grundkreises 45 der Verzahnung 31 mit den Zahnflanken 37 und 38 und ergibt sich in diesem Ausführungsbeispiel zu 0,915 mm.

Das Planetengetriebe 10 nach Figur 5 kann auch mit einem Planetenrad 30 ausgebildet werden, das keine radiale Bohrung 43 aufweist. In diesem Fall sorgen lediglich die als Schmierfettreservoir dienenden Längsnuten 52 des Bolzens 50 für eine kontinuierliche Schmierung der Gleitfuge 61. Auch hier muss vor der Montage des Planetenrades 30 auf den Bolzen 50 dessen Längsnuten 52 mit Schmierfett aufgefüllt werden.

Dadurch, dass in diesem Fall kein Schmierfett in diese Längsnuten 52 nachgeführt werden kann, ist gegenüber einem Planetengetriebe 10 mit Planetenräder 30, die eine radiale Bohrung 43 aufweisen, die Lebensdauer geringer, jedoch immer noch um den Faktor 2 bis 3 höher als ohne solche Längsnuten 52.

### Bezugszeichenliste

- 10: Umlauf-Zahnradgetriebe, Planetengetriebe
- 20: Hohlrad
- 21: Verzahnung
- 22: Zahn von 20
- 23: Zahnkopf
- 24: Zahngrund
- 27: Zahnflanke
- 28: Gegenflanke
- 30: umlaufendes Zahnrad, Planentenrad
- 31: Verzahnung
- 32: Zahn von 30
- 33: Zahnkopf
- 34: Zahngrund
- 35: Teilkreis
- 36: Kopfkreis
- 37: Zahnflanke
- 38: Gegenflanke
- 39: Zahnfuß
- 41: Zahnlücke
- 42: Durchgangsbohrung
- 43: Radial orientierte Bohrung
- 44: Fußkreis
- 45: Grundkreis von 30
- 47: Endpunkt der Wälzfuge an 37
- 48: Endpunkt der Wälzfuge an 38
- 50: Bolzen, Lagerbolzen für 30
- 51: Mantelfläche von 50
- 52: Axiale Längsnut
- 60: Radialgleitlager
- 61: Gleitfuge
- 70: Planetenträger
- 71: Bohrung zur Aufnahme von 50
- 72: Zentrale Bohrung
- 73: Teilkreis
- 80: Ritzel

## Patentansprüche

1. Umlauf-Zahnradgetriebe (10) mit mindestens zwei miteinander unter Ausbildung eines Eingriffsraums kämmenden Zahnrädern (20, 30), von denen eines ein mittels einer Lagerung (60) auf einem Bolzen (50) drehbar gelagertes umlaufendes Zahnrad (30) ist und eine Mantelfläche (51) des Bolzens (50) eine Lagerfläche bildet, wobei auf der Mantelfläche (51) des Bolzens (50) wenigstens eine axiale Längsnut (52) angeordnet ist,
**dadurch gekennzeichnet, dass** das wenigstens eine bolzengelagerte umlaufe nde Zahnrad (30) mindestens eine radiale Bohrung (43) aufweist, die den Eingriffsraum der miteinander kämmenden Zahnräder (20, 30) mit der Lagerung (60) des wenigstens einen bolzengelagerten umlaufenden Zahnrades (30) verbindet, und
dass die Bohrung (43) im Zahngrund (34) des wenigsten einen bolzengelagerten umlaufenden Zahnrades (30) angeordnet ist.

2. Umlauf-Zahnradgetriebe (10) nach Anspruch 1,
**dadurch gekennzeichnet, dass**
die axiale Längsnut (52) mit einem kreisabschnittsförmigen, halbkreisförmigen, konkaven, konvexen oder V-förmigen Querschnitt ausgebildet ist.

3. Umlauf-Zahnradgetriebe (10) nach Anspruch 2,
**dadurch gekennzeichnet, dass**
die axiale Längsnut (52) in demjenigen Bereich des Bolzens 50 vorgesehen ist, der das wenigstens eine bolzengelagerte umlaufende Zahnrad (30) aufnimmt.

4. Umlauf-Zahnradgetriebe (10) nach einem der Ansprüche 1 bis 3,
**dadurch gekennzeichnet, dass**
zwei axiale Längsnuten (52) diametral gegenüberliegend auf der Mantelfläche (51) des Bolzens (50) angeordnet sind.

5. Umlauf-Zahnradgetriebe (10) nach einem der vorhergehenden Ansprüche,
d a durch gekennzeichnet, dass
der bzw. die Bolzen (50) in einem Planetenträger (70) angeordnet ist bzw. sind.

6. Umlauf-Zahnradgetriebe (10) nach Anspruch 5,
**dadurch gekennzeichnet, dass**
auf der Mantelfläche des bzw. der Bolzen (50) jeweils nur zwei axiale Längsnuten angeordnet sind, und
dass der bzw. die Bolzen (50) derart in dem Planetenträger (70) angeordnet sind, dass die beiden axialen Längsnuten (52) des Bolzens (50) bzw. der Bolzen (50) hinsichtlich des Planetenträgers (70) radial fluchtend verlaufen.

7. Umlauf-Zahnradgetriebe (10) nach einem der Ansprüche 1 bis 6,
**dadurch gekennzeichnet, dass**
der Durchmesser der Bohrung (43) kleiner ist als der Abstand der fußpunktseitigen Endpunkte (47, 48) der Wälzfugen zweier sich gegenüberliegenden Zahnflanken (37, 38) des wenigstens einen bolzengelagerten umlaufenden Zahnrades (30), wobei
der Abstand dieser Endpunkte (47, 48) gleich dem Abstand der Schnittpunkte des Grundkreises (45) der Verzahnung (31) mit den Zahnflanken (37, 38) ist.

8. Umlauf-Zahnradgetriebe (1) nach Anspruch 7,
**dadurch gekennzeichnet, dass**
der Durchmesser der Bohrung (43) größer ist als der Modul der Verzahnung (31) des wenigstens einen bolzongelagerten umlaufenden Zahnrades (30).

9. Umlauf-Zahnradgetriebe (1) nach einem der vorangehenden Ansprüche,
**dadurch gekennzeichnet, dass**
das wenigstens eine bolzengelagerte umlaufende Zahnrad (30) mit einem Hohlrad (20) kämmt.

10. Umlauf-Zahnradgetriebe (1) nach einem der vorangehenden Ansprüche,
**dadurch gekennzeichnet, dass**
das wenigstens eine bolzengelagerte umlaufende Zahnrad (30) mit einem Sonnenrad kämmt.

## Claims

1. Revolving gear drive (10) having at least two gear wheels (20, 30) which comb together with each other, forming an engagement space, of which one is a revolving gear wheel (30) mounted rotatably on a pin (50) by means of a bearing (60) and a shell surface (51) of the pin (50) forms a bearing surface, wherein at least one axial longitudinal groove (52) is arranged on the shell surface (51) of the pin (50),
**characterised in that** the at least one pin-mounted revolving gear wheel (30) has at least one radial bore (43) which connects the engagement space of the gear wheels (20, 30) which comb together with each other to the bearing (60) of the at least one pin-mounted revolving gear wheel (30) and
the bore (43) is arranged in the tooth base (34) of the at least one pin-mounted revolving gear wheel (30).

2. Revolving gear drive (10) according to claim 1,
**characterised in that** the axial longitudinal groove (52) is formed with a circle segment-shaped, semi-circular, concave, convex or V-shaped cross-section.

3. Revolving gear drive (10) according to claim 2,
**characterised in that** the axial longitudinal groove (52) is provided in the region of the pin (50) which receives the at least one pin-mounted revolving gear wheel (30).

4. Revolving gear drive (10) according to one of claims 1 to 3,
**characterised in that** two axial longitudinal grooves (52) are arranged diametrically opposite each other on the shell surface (51) of the pin (50).

5. Revolving gear drive (10) according to one of the preceding claims,
**characterised in that** the pin(s) (50) is/are arranged in a planetary carrier (70).

6. Revolving gear drive (10) according to claim 5,
**characterised in that** only two axial longitudinal grooves are arranged on the shell surface of the pin(s) (50) respectively, and
the pin(s) (50) are arranged in such a way in the planetary carrier (70) that the two axial longitudinal grooves (52) of the pin (50) or the pins (50) run in a radially aligned manner with regard to the planetary carrier (70).

7. Revolving gear drive (10) according to one of claims 1 to 6,
**characterised in that** the diameter of the bore (43) is smaller than the spacing of the base point-side end points (47, 48) of the rolling joint of two opposing tooth edges (37, 38) of the at least one pin-mounted revolving gear wheel (30), wherein the spacing of these end points (47, 48) is the same as the spacing of the intersection points of the base circle (45) of the toothing (31) with the tooth edges (37, 38).

8. Revolving gear drive (1) according to claim 7,
**characterised in that** the diameter of the bore (43) is greater than the modulus of the toothing (31) of the at least one pin-mounted revolving gear wheel (30).

9. Revolving gear drive (1) according to one of the preceding claims,
**characterised in that** the at least one pin-mounted revolving gear wheel (30) combs together with a ring gear (20).

10. Revolving gear drive (1) according to one of the preceding claims,
**characterised in that** the at least one pin-mounted revolving gear wheel (30) combs together with a sun gear.

## Revendications

1. Transmission à roue dentée planétaire (10) comprenant au moins deux roues dentées (20, 30) s'engrenant l'une avec l'autre en formant un espace de mise en prise, et dont l'une est une roue dentée planétaire (30) montée mobile en rotation sur un tourillon (60) au moyen d'un palier (60), une surface-enveloppe (51) du tourillon (50) formant une surface de palier, au moins une rainure longitudinale axiale (52) étant située sur la surface-enveloppe (51) du tourillon (50),
**caractérisé en ce que**
la roue dentée planétaire (30) montée sur un tourillon comprend au moins un perçage radial (43) qui relie l'espace de mise en prise des roues dentées (20, 30) s'engrenant l'une avec l'autre avec le palier (60) de la roue dentée planétaire (30) montée sur un tourillon, et
le perçage (43) est situé sur la base des dents (34) de la roue dentée planétaire (30) montée sur un tourillon.

2. Transmission à roue dentée planétaire (10) conforme à la revendication 1,
**caractérisée en ce que**
la rainure longitudinale axiale (52) est réalisée avec une section en forme de secteur circulaire, en forme de demi-cercle, concave, convexe ou en forme de V.

3. Transmission à roue dentée planétaire (10) conforme à la revendication 2,
**caractérisée en ce que**
la rainure longitudinale axiale (52) est située dans la zone du tourillon (50) qui reçoit la roue dentée planétaire (30) montée sur un tourillon.

4. Transmission à roue dentée planétaire (10) conforme à l'une des revendications 1 à 3,
**caractérisée en ce que**
deux rainures longitudinales axiales (52) diamétralement opposées sont situées sur la surface-enveloppe (51) du tourillon (50).

5. Transmission à roues dentées rotatives (10) conforme à l'une des revendications précédentes,
**caractérisée en ce que**
le ou les tourillon(s) (50) est(sont) monté(s) dans une cage de transmission planétaire (70).

6. Transmission à roue dentée planétaire (10) conforme à la revendication 5,
**caractérisée en ce que**
seulement deux rainures longitudinales axiales sont respectivement situées sur la surface-enveloppe du ou des tourillon(s) (50), et le ou les tourillon(s) (50) est(sont) monté(s) dans la cage de transmission planétaire (70) de sorte que les deux rainures longitudinales axiales (52) du ou des tourillon(s) (50) s'étendent en étant en alignement radial par rapport à la cage de transmission planétaire (70).

7. Transmission à roues dentées rotatives (10) conforme à l'une des revendications 1 à 6,
**caractérisée en ce que**
le diamètre du perçage (43) est inférieur à la distance entre les points d'extrémité (47, 48) situés côté racine des jointures primitives de deux flancs de dents (37, 38) opposés de la roue dentée planétaire (30) montée sur un tourillon, la distance entre ces points d'extrémité (47, 48) étant égale à la distance des points d'intersection du cercle de base (45) de la denture (31) avec les flancs de dents (37, 38).

8. Transmission à roues dentées rotatives (1) conforme à la revendication 7,
**caractérisée en ce que**
le diamètre du perçage (43) est supérieur au module de la denture (31) de la roue dentée planétaire (30) montée sur un tourillon.

9. Transmission à roues dentées rotatives (1) conforme à l'une des revendications précédentes,
**caractérisée en ce que**
la roue dentée planétaire (30) montée sur un tourillon s'engrène avec une couronne circulaire (20).

10. Transmission à roues dentées rotatives (1) conforme à l'une des revendications précédentes,
**caractérisée en ce que**
la roue dentée planétaire (30) montée sur un tourillon s'engrène avec une roue solaire.
